# EUROPÄISCHE PATENTSCHRIFT

(11) **EP 2 048 916 B1**
(45) Veröffentlichungstag und Bekanntmachung des Hinweises auf die Patenterteilung: **07.12.2011**
(21) Anmeldenummer: 08166368.4
(22) Anmeldetag: 10.10.2008
(51) Int. Cl.: H05B 37/02

(54) **Intelligentes Leuchtensystem**
Intelligent lighting system
Système de lampes intelligent

(30) Priorität: 12.10.2007 DE 202007014369 U
(43) Veröffentlichungstag der Anmeldung: 15.04.2009
(73) Patentinhaber: Ruppel, Stefan, 36100 Petersberg (DE)
(72) Erfinder: Ruppel, Stefan, 36100 Petersberg (DE)
(74) Vertreter: Stöckeler, Ferdinand

(56) Entgegenhaltungen:
- DE-A1- 4 430 441
- DE-T3- 68 904 513
- US-A- 5 962 989
- US-A1- 2005 179 404

## Beschreibung

Die Erfindung betrifft ein Leuchtennetzwerk mit mehreren Leuchteinheiten als Netzwerkknoten, die an eine gemeinsame Stromversorgungseinrichtung angeschlossen sind. Ferner ist in der Stromversorgungseinrichtung ein Kanal zur Informationsübermittlung von und zu den Leuchteinheiten ausgebildet. Außerdem betrifft die Erfindung eine elektronisch steuerbare Leuchteinheit, die zum Einsatz in das Leuchtennetzwerk sowie insbesondere zur Anbringung an Möbel und/oder in einem Wohnraum ausgebildet ist. Die Leuchteinheit ist mit einem oder mehreren Leuchtmitteln verbunden, die von einem jeweils zugeordneten Leistungsstellglied betätigbar sind. Letzteres wird von einem digitalen Steuer-Schaltwerk angesteuert, das mit einer Kommunikationsschnittstelle zum Empfang, zur Verarbeitung und/oder zum Senden von Steuerungsbefehlen und/oder Daten versehen oder verbunden ist. Weiter ist die Leuchteinheit mit einem Anschlussglied zur Ankopplung an die Stromversorgungseinrichtung ausgestattet.

DE-A-10 2006 051 026 beschreibt eine Leuchte mit einem Gehäuse, worin steuerbare Leuchtmittel untergebracht sind. Die Leuchte weist ferner eine in die Leuchte integrierte Steuerung auf, mit der unterschiedliche Beleuchtungsbedingungen durch Parameteränderung einstellbar sind. Unmittelbar am Gehäuse ist eine manuelle Bedieneinrichtung für die Steuerung angeordnet. Die beschriebene Leuchte soll insbesondere als Arbeitsplatzleuchte dienen. Auch wird die Einbindung der Leuchte in ein Netzwerk mit einer computergestützten, zentralen Steuerung angesprochen. Konkrete Mittel zur Ankopplung der Leuchte oder Leuchtmittel an das Netzwerk sowie die Ankopplungsart oder dergleichen sind nicht beschrieben.

DE-A-198 17 073 beschreibt eine Vorrichtung zur Steuerung einer Mehrzahl von Beleuchtungselementen. Als Zweck wird die Steuerung von Lichtszenen über eine Eingabevorrichtung zur Eingabe von Beleuchtungsinformationen angegeben, die über eine Signalübertragungseinrichtung (z. B. Bussystem) mit mehreren Signalverarbeitungs- und Speicherungsmodulen verbunden sind. Darin werden die eingegebenen Informationen in Befehle für einzelne Beleuchtungselemente umgesetzt. Letztere sind jeweils mit einem gemeinsamen Signalverarbeitungsund Speichermodul über dessen Analog- oder Schaltausgang verbunden und darüber ansteuerbar. Die Beleuchtungselemente selbst sind nicht näher beschrieben.

In WO-A-2006/054 263 ist eine mehrdimensionale Steuerung von Lichtparamentern mittels einer Kugelspurführung beschrieben. Dadurch soll ein bestimmtes Ambiente durch Lichteffekte erzeugt werden. Mittels Bewegungssensoren wird die Kugelspurführung von einer Steuerung abgetastet, welche mit einer Lichtsteuerung zur Betätigung von Leuchten gekoppelt ist. Die Leuchten selbst sind nicht näher beschrieben.

In der Gebrauchsmuster-Veröffentlichung DE 296 04 904 U1 wird ein Installationsbussystem für eine Stromschienenbeleuchtung beschrieben. In der Stromschiene sind mehrere Leuchten montiert. Über einen Umsetzer ist eine Leitung eines Zweidrahtbusses angeschlossen, und ein Tastsensor sowie weitere Sensoren und Aktoren sind mit dem Zweidrahtbus verbunden. Telegramme, die in der Leitung des Zweidrahtbusses erzeugt werden, werden von dem Umsetzer aufgenommen und so aufbereitet und formatiert, dass sie auf die leitenden Bahnen der Stromschiene aufgeprägt werden. Die Leuchten, die jeweils unter anderem mit Modem, Mikrocontroller, Netzteil und Leistungsstufe ausgestattet sind, entnehmen diese Telegramme aus den Leitersträngen der Stromschiene und setzen die empfangene Information in einen gewünschten Helligkeitswert und/oder einen Ein-/Aus-Zustand für Leuchtmittel um. Andererseits können auch die Leuchten Informationen über ihren Zustand durch Telegramme auf die leitenden Stränge der Stromschiene an den Umsetzer geben, der diese nach Umformatierung in den Zweidrahtbus einspeist. In dem Modem der Leuchte werden logischen Pegeln "Null" oder "Eins" bestimmte Frequenzen zugeordnet und der Netzspannung der Stromschiene überlagert bzw. aufmoduliert. Somit kann jede Leuchte Daten über die Stromschiene und dort aufmodulierte Frequenzen mit anderen austauschen. An den Mikrocontroller der jeweiligen Leuchte ist ein Kodierschalter angeschlossen, worüber weitere Funktionen im Mikrocontroller, beispielsweise Ansteuern einer Leistungsstufe, Dimmen, Ein-/Ausschalten usw. eingestellt werden können.

In der Offenlegungsschrift DE 103 52 286 A1 wird ein Steuersystem mit mehreren Aktoren vorgeschlagen, welche über zwei Versorgungsleitungen und eine Datenleitung miteinander in Verbindung stehen. Ziel ist es, die Aktoren (beispielsweise Antriebe, Lampen, Fühler, Wächter, die an Gebäuden installiert sind) bereits bei der Projektierung in ihrer Funktionalität festlegen zu können, ohne dass die Aktoren mit spezifischen Adressen versehen werden müssen.

WO-A-94/18 809 beschreibt ein gesteuertes Beleuchtungssystem, bei welchem Daten und Taktinformationen über einen seriellen Zweidrahtbus einzelnen Leuchtmodulen übermittelt werden. Diese beinhalten eigene Steuerungseinheiten, an welche jeweils mehrere Lichtelemente angekoppelt sind. Deren Ankopplung bzw. Ansteuerung erfolgt von Datenregistern aus, die einzelnen Farben zugeordnet sind, über Digital/Analog-Wandler.

Aus der DE 44 30 441 A1 ist eine Vorrichtung zur Steuerung von elektrischen Verbrauchern bekannt, bei welcher mehrere zentral in einem Gebäude angeordnete fernsteuerbare Umschalteinrichtungen über Leitungen mit Verbrauchern und Schaltelementen verbunden sind. In einem Havarie-Betrieb wird ein angeschlossener Verbraucher abhängig von der Schaltstellung eines zugehörigen Schaltelements durch in der Umschaltvorrichtung vorgesehene Schalter an Netzspannung gelegt. In einem Fernsteuer-Betrieb sendet die Umschalteinrichtung Daten über die Schaltstellung des Schaltelements auf einem Datenbus zu einem Rechner; parallel dazu empfängt die Umschalteinrichtung Schaltdaten zum Ein- und Ausschalten des Verbrauchers von dem Rechner.

Aus der US 5,692,989 ist ein energiesparendes Lichtsteuersystem zum Betrieb von Fluoreszenzleuchten mit Mitteln zur Steuerung des Lichtlevels gemäß dem Lichtlevel, der für die in dem entsprechenden Bereich zu erledigende Aufgabe erforderlich ist, bekannt. Beispielsweise wird das Umgebungslicht, das von Quellen außerhalb des gesteuerten Bereichs zugeführt wird, wie beispielsweise Tageslicht, verwendet, um den Grad an künstlicher Beleuchtung zu reduzieren. Weiterhin können Sensorimpulse verwendet werden, mit denen die Nutzung in einem zu steuernden Bereich detektiert wird. Eine zentrale Steuerung des Betriebs des Lichtsystems kann dazu dienen, tageszeitabhängige Vorgaben zu machen, minimale und maximale Lichtlevel vorzugeben, Antwortzzeiten für die Sensordaten anzugeben und so weiter.

Der Erfindung liegt die Aufgabe zugrunde, bei einem Leuchtensystem mit untereinander netzwerkartig verbundenen Leuchten die Steuer- und Bedieneffizienz zu erhöhen. Zur Lösung werden das im Anspruch 1 angegebene Leuchtennetzwerk sowie die dafür im nebengeordneten bzw. unabhängigen Anspruch 7 spezifizierte Leuchteinheit vorgeschlagen. Optionale,' zweckmäßige Ausgestaltungen des Erfindungs-Grundgedankens ergeben sich aus den abhängigen (Unter-)Ansprüchen.

Nach der Erfindung ist im Leuchtennetzwerk jede mit Bedienund/oder Sensorelementen versehene oder gekoppelte Leuchte über eine einoder mehradrige Informationssignal-Leitung mit dem Informationsübermittlungskanal in der den Leuchten gemeinsamen Stromversorgungseinrichtung verbunden. Dadurch ist es möglich, dass jede Leuchte Informationen an die übrigen Leuchten versendet. So kann jede Leuchte, wenn ein ihr direkt zugeordnetes Bedien- und/oder Sensorelement ein Stellsignal auslöst, dieses Stellsignal nicht nur bei sich selbst zur Ansteuerung des oder der Leuchtmittel umsetzen, sondern auch an die anderen Leuchten des Netzwerks über den Informationsübermittlungs-Kanal weitergeben. Zweckmäßig sind dazu das oder die Bedien- und/oder Sensorelemente mit ihren Ausgängen in Parallelschaltung an die Informations-Signalleitung der jeweiligen Leucht-Einheit angekoppelt. Insbesondere kann so die Informationssignal-Leitung als der Leucht-Einheit interner Ein- oder Mehrdraht-Bus für die Baumodule oder -komponenten ausgebildet sein.

Mit dem erfindungsgemäßen Leuchtennetzwerk und auch der weiter unten näher erläuterten Leuchteinheit lassen sich ein erhöhter Bedienkomfort und eine vereinfachte Installation erzielen, ohne dass dazu spezifische PC-Kenntnisse notwendig wären. Der Aufbau lässt sich übersichtlich und erweiterungsfähig gestalten, und eine Adressierung der Netzwerkteilnehmer braucht nicht implementiert zu werden. Indem erfindungsgemäß die Informationssignal-Leitung der Leuchteinheit mit dem Informationsübermittlungskanal der Stromversorgungseinrichtung kommunikationstechnisch verbunden ist, lassen sich alle Netzwerkteilnehmer ohne großen Telegramm-Overhead auf den gleichen Informationsstand bringen.

Gemäß anfangs genanntem Stand der Technik ist es bekannt, in der Leucht-Einheit ein oder mehrere Leistungsstellglieder zum Aktivieren eines oder mehrerer zugehöriger oder zugeordneter Leuchtmittel einzusetzen. In Weiterführung dieses Gedankens besteht eine. Erfindungsausgestaltung darin, die Leistungsstellglieder an ihrem jeweiligen Eingang von dem oder den Bedienund/oder Sensorelementen aus direkt anzusteuerbar zu gestalten. Dabei kann es zweckmäßig sein, dass die Informationssignal-Leitung mit dem jeweiligen Eingang des oder der Leistungsstellglieder verbunden ist. So lässt sich der Vorteil erzielen, dass von den Bedien- oder Sensorelementen ausgehende Auslösesignale nicht nur in einer, sondern in mehreren oder allen der Netzwerk-Leuchteinheiten verarbeitet werden können, vorzugsweise individuell spezifiziert über Codierschalter, Jumper oder so genannte "Modis".

"Leuchtmittel" im Sinne der Erfindung sollen insbesondere (nicht ausschließlich) Kaltkathodenlampen mit einem elektrischem Vorschaltgerät mit Royerkonverter oder Brückenwandler, insbesondere Vollwegbrückenwandler in Resonanztechnologie, oder Multichip-LEDs oder sonstige LED-Einrichtungen umfassen. Das elektrische Vorschaltgerät kann mit einem integrierten Schaltkreis und/oder an sich bekannten Sicherheitsmitteln insbesondere gegen Brandgefahr, Hochspannung und Stromschlag, ausgeführt sein. Ferner liegt es im Rahmen der Erfindung, dass die Netzwerk-Leuchteinheiten und/oder Bedienelemente Mittel zur Zustands- und/oder Kontrollanzeige aufweisen. Im Rahmen der Erfindung können die Bediensensorelemente auf der Basis beispielsweise optischer, kapazitiver, magnetischer und/oder kraftsensitiver Technologien realisiert sein.

Nach einer weiteren Ausgestaltung werden Steuer-Schaltwerke in der jeweiligen Leuchteinheit zum Ansteuern der Leistungsstellglieder eingesetzt. Letzteres ist für sich genommen bekannt, jedoch besteht eine Erfindungsausgestaltung darin, dass der Eingang des Steuer-Schaltwerks - analog zur oben angesprochenen Verbindung des Leistungsstellglied-Eingangs mit der Informationssignal-Leitung - mit dem oder den Ausgängen des einen oder der mehreren Bedien- und/oder Sensorelemente verbunden ist, um auf deren Ausgangssignal gegebenenfalls mit der Ansteuerung der Leistungsstellglieder anzusprechen. Darüber hinaus ist gegebenenfalls die Informationssignal-Leitung der jeweiligen Leuchteinheit mit dem Eingang des Steuerschaltwerks verbunden, so dass sich der oben genannte Vorteil bei dieser Ausgestaltung ebenfalls erzielen lässt.

Stromversorgungseinrichtungen in Form von Stromversorgungsschienen zur parallelen Anschaltung von Verbrauchern sind an sich bekannt, wie aus dem anfangs genannten Stand der Technik hervorgeht. Davon ausgehend besteht eine erfindungsgemäße Weiterbildung des Leuchtennetzwerkes darin, dass neben den Versorgungsstrom führenden Leistungsadern der Stromversorgungsschiene wenigstens eine vorzugsweise räumlich parallel verlaufende, elektrisch leitende (Informationssignal-)Ader als Informationsübermittlungskanal allein zum Übertragen von Informationssignalen (beispielsweise binäre Daten- und/oder Kommando-Impulsfolgen) angeordnet ist. Daran sind zweckmäßig die Informationssignalleitungen der Leuchteinheiten parallelen angeschlossen. Durch diese erfindungsgemäße Erweiterung der Stromversorgungsschiene lässt sich in baulich einfacher Weise eine Daten- und Befehlskommunikation zwischen den einzelnen, elektronisch steuerbaren Leuchten des Leuchtennetzwerks realisieren.

Eine vorteilhafte Weiterbildung der genannten Leuchtennetzwerkausbildung umfasst die Anordnung von Anschlussgliedern zur Ankopplung der Leuchteinheiten an die Stromversorgungsschiene, wobei das jeweilige Anschlussglied wenigstens drei Anschlussklemmen zur Verbindung mit zwei Leistungsadern und einer Informationssignal-Ader aufweist.

Insbesondere bei der Realisierung des Informationsübermittlungskanals mit der genannten Informationssignal-Ader ist der Weg zu einer weiteren Ausbildung eröffnet, wonach ein als extra Netzwerkknoten, vorzugsweise ohne Steuerschaltwerk und Leistungsstellglied, angeordnetes Bedien- und/oder Sensorelement ausgangsseitig mit dem Informationsübermittlungs-Kanal der gemeinsamen Stromversorgungseinrichtung und gegebenenfalls zusätzlich oder alternativ mit der Informations-Signalleitung einer, mehrerer oder aller Steuereinheiten verbunden ist.

Die erfindungsgemäße Leuchteinheit zeichnet sich durch eine einoder mehradrige Informationssignal-Leitung aus, über welche eine Kommunikation der baulich integrierten oder angekoppelten Bedien- und Sensorelemente der Leuchteinheit nicht nur zum Steuer-Schaltwerk, sondern auch über das Anschlussglied und damit über die gemeinsame Stromversorgungseinrichtung zu anderen Leuchteinheiten ermöglicht ist. Damit wird der Vorteil erzielt, dass eine Mehrzahl gleichartiger Leuchteinheiten koordiniert oder aufeinander abgestimmt betrieben werden. Die Bedienwünsche des Benutzers des jeweiligen Leuchtensystems stehen allen (Netzwerk-)Leuchteinheiten stets zur Verfügung, und diese können darauf reagieren. Dies kann insbesondere gemäß einer vorbestimmten Funktionsweise erfolgen, die sich in an sich bekannter Weise durch Kodierschalter einstellen lässt, welche auf die Steuermittel-Schaltwerke der Leuchteinheiten über jeweilige Binäreingänge einwirken und diese so individuell konfigurieren können.

Zur Realisierung "intelligenter" Leuchteinheiten ist der Einsatz von Mikrocontrollern als jeweiliges Schaltwerk zweckmäßig. Die Mikrocontroller sind leicht und kostengünstig beziehbar. Neben seriellen und parallelen Schnittstellen und Eingängen zur Unterbrechungssteuerung (Interrupt) besitzen sie auch Schnittstellen zur Analog-/Digitalwandlung und zur Digital-/Analogwandlung, zur Spannungs-Frequenzwandlung, Programmunterbrechung (Interrupt), Binärkodierung, parallelen und/oder seriellen Datenkommunikation (TxD,RxD) sowie neuerdings sogar zur Nachrichten-Funkübertragung. Parallele Schnittstellen bzw. Parallel-Ports lassen sich mit angeschlossenen Kodierschaltern insbesondere in der Ausführung als Jumper einsetzen, um über manuelle Einstellungen dem Mikrocontroller Steuercodes zur Ausübung spezifizierter Funktionen einzugeben und diese auch nachträglich zu modifizieren.

Insbesondere im Zusammenhang mit diesen Schnittstellen ergibt sich eine weitere, vorteilhafte Erfindungsausbildung, wonach der Informationssignal-Leitung und dem Steuer-Schaltwerk ein Signal-Umschalter zwischengeschaltet ist. Damit können von dem Schaltwerk in Form des Mikrocontrollers nicht nur typische Bussignale, sondern auch Analogsignale zwischen einem Pegel von 0-10 Volt beispielsweise je nach Unschalt-Stellung zur Verarbeitung zugeleitet werden. Diese Analogpegel könnten von extern, beispielsweise von der oben genannten Stromschiene mit Informationssignal-Ader abgegriffen werden. Der Mikrocontroller kann das empfangene Analogsignal nach Digitalwandlung und Verarbeitung beispielsweise über Pulsweitenmodulation zum Dimmen eines zugeordneten Leuchtmittels der Leuchteinheit verwenden. Die dadurch erzielbare Erhöhung der Anwendungsflexibilität liegt auf der Hand.

Aber auch fest verdrahtete Schaltwerkslogik zur Ansteuerung der Leuchtmittel über Leistungsstellglieder liegt im Rahmen der Erfindung. So können zur Realisierung des Schalterwerks ein oder mehrere bistabile Kippschaltungen, beispielsweise Flip-Flops, insbesondere JK-Flip-Flops, eingesetzt werden, wobei der jeweilige Kippschaltungs- oder Flip-Flop-Eingang mit der Informationssignal-Leitung und der jeweilige Kippschaltungs- oder Flip-Flop-Ausgang mit dem jeweiligen Leistungsstellglied zu dessen Ansteuerung verbunden sind. Die damit erzielbare bauliche Vereinfachung unter Vermeidung von Programmierung und Software-Implementierung ist offensichtlich.

Zur Montageerleichterung und/oder zur Erhöhung der Anwendungsflexibilität besteht eine vorteilhafte Erfindungsausbildung darin, die Leuchteinheit mit modulartig ausgebildeten Baukomponenten zu bilden, für welche vorzugsweise Steckaufnahmen, insbesondere Buchsen, oder auch andere andersartige Aufnahmen vorgesehen sind.

Weitere Einzelheiten, Merkmale, Merkmals-(Unter)Kombinationen, Vorteile und Wirkungen auf der Basis der Erfindung ergeben sich aus der nachfolgenden Beschreibung bevorzugter Ausführungsformen der Erfindung und aus den Zeichnungen. Diese zeigen in:
Figur 1 eine schematische Schaltungsskizze eines Leuchtennetzwerks mit mehreren Leuchten als Netzwerkknoten,
Figur 2 eine Prinzipskizze vom erfindungsgemäßen Leuchtennetzwerk mit mehreren Leuchten als Netzwerkknoten,
Figur 3 eine schematische Schaltungsskizze des erfindungsgemäßen Leuchtennetzwerks bzw. -systems mit der Steuerung der jeweiligen Leuchteinheiten über digitale Kippstufen,
Figur 4 ein Anwendungsbeispiel des erfindungsgemäßen Leuchtennetzwerks als Lichtband,
Figur 5 ein Anwendungsbeispiel des erfindungsgemäßen Leuchtennetzwerks zur Kleiderschrankbeleuchtung mit Türsensor-Schaltung,
Figur 6 ein Gebäude-Anwendungsbeispiel des erfindungsgemäßen Leuchtennetzwerks, insbesondere für Gänge (Flure), Treppenaufstiege, Treppenhäuser usw.
Figur 7 ein weiteres Anwendungsbeispiel des erfindungsgemäßen Leuchtennetzwerks als Hängeleuchte,
Figur 8 eine schematische Schaltungsskizze eines Ausführungsbeispiels einer erfindungsgemäßen Leuchteinheit für das Leuchtennetzwerk,
Figur 9 eine schematische Schaltungsskizze eines Ausführungsbeispiels einer erfindungsgemäßen Leuchteinheit für das Leuchtennetzwerk,
Figur 10 eine schematische Schaltungsskizze eines Ausführungsbeispiels einer erfindungsgemäßen Leuchteinheit für das Leuchtennetzwerk,
Figur 11 in schematischer Blockdarstellung eine Konkretisierung des Datenkonverters gemäß Figur 10,
Figur 12 einen skizzenhaft dargestellten Schaltungsausschnitt über die Realisierung der Frequenzmodulationskopplung zwischen Stromversorgungseinrichtung und Leuchteinheit,
Figur 13 eine prinzipielle Schaltungsskizze einer mit Wechselstrom versorgbaren Leuchteinheit,
Figur 14 eine prinzipielle Schaltungsskizze einer mit Gleichstrom versorgbaren Leuchteinheit,
Figur 15 eine schematische Schaltungsskizze zur Ansteuerung eines Steuer-Schaltwerks einer erfindungsgemäßen Leuchteinheit durch einen Signal-Umschalter,
Figur 16 eine Schaltung eines Tastsensors zur Anwendung für die Erfindung,
Figur 17 ein weiteres, steckerleistenartiges Ausführungsbeispiel der erfindungsgemäßen Leuchteinheit zur Aufnahme von Bau- und Funktionsmodulen,
Figur 18 ein weiteres Ausführungsbeispiel zur Realisierung einer galvanisch getrennten Kopplung mit einem benachbarten Netzwerk.

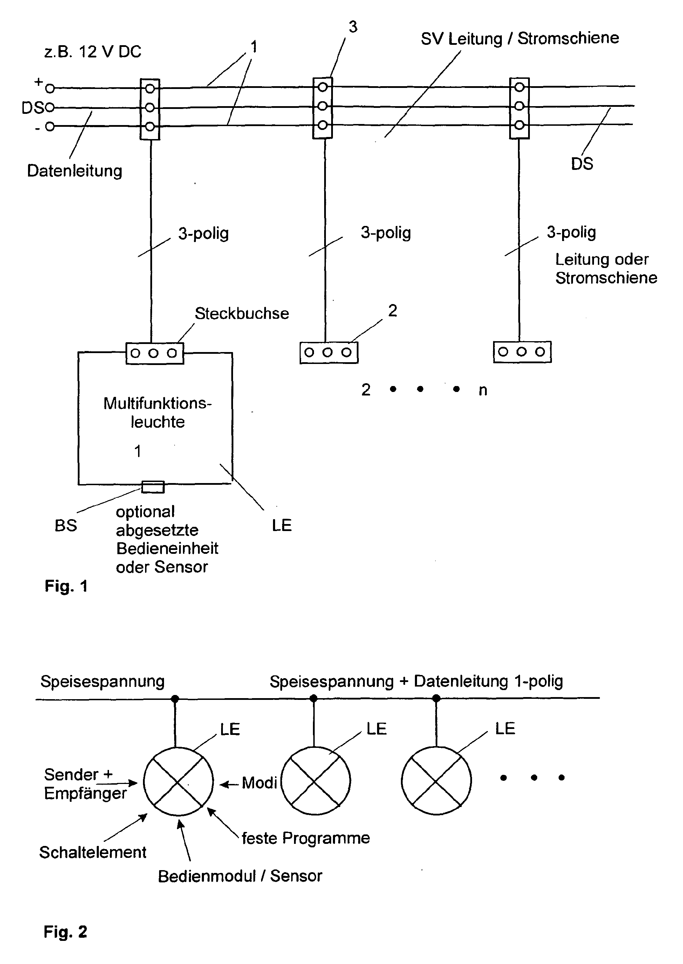

Das in Figur 1 skizzierte Leuchtennetzwerk weist eine Mehrzahl 1, 2, ... n Leuchteinheiten LE auf, die, wie nachstehend erläutert, bevorzugt "intelligent" mit vielen programmierbaren Funktionen ausgebildet und eingestellt sind. Jede Leuchte LE ist mit einem Bedien- und/oder Sensorelement BS gekoppelt, das von der Leuchteinheit LE entweder räumlich entfernt bzw. abgesetzt angeordnet oder mit der Leuchteinheit LE baulich integriert sein kann. Die mehreren Leuchteinheiten LE 1, 2, ... n sind nicht nur über eine gemeinsame Stromversorgungsschiene SV mit zwei Leistungsadern 1, sondern auch kommunikationstechnisch über eine Daten- und/oder Signalader als Informationssignal-Ader DS verbunden. Die Verbindung wird erleichtert durch jeweilige, dreipolige Steckbuchsen 2, die an die Leuchteinheiten LE angebaut oder sonst mit diesen baulich integriert sind. Dreiadrige Kabel führen dann von der Steckbuchse 2 zu komplementären Anschlussadaptern 3, die jeweils mit der Stromversorgungsschiene SV elektrisch leitend in Eingriff stehen.

In Figur 2 ist vereinfacht dargestellt, wie einzelne Leuchteinheiten LE mit einer Speisespannungsversorgung (vorzugsweise eine zweiadrige Stromversorgungsschiene) und einer vorzugsweise eindrahtigen Daten- und/oder Signalleitung (als Informationsübermittlungskanal) in Verbindung stehen. Alle Leuchteinheiten LE können modulartig mit Komponenten bzw. Modulen wie Sender/Empfänger, Modi bzw. Jumper, festen Steuerungs-Programmen bzw. Software, Bedien- und/oder Sensormodulen oder Leistungsstellglieder bzw. Schaltelemente für Leuchtmittel ausgestattet sein. Damit wird ein Betrieb der jeweiligen Leuchteinheiten LE sowohl autonom im Stand-Alone-Betrieb als auch im daten- und/oder befehlsmäßigen Kommunikationsverbund mit anderen Netzwerkteilnehmem ermöglicht. Bei Kollision von Sendesignalen bzw. - telegrammen unterschiedlicher Netzwerkteilnehmer auf der Daten- und/oder Signalader DS innerhalb der gemeinsamen Spannungsversorgung kommt es zu einer "Überlagerung" dieser kollidierenden Sendesignale, was eine Verwertung als "ungültig" durch die empfangenden Netzwerkteilnehmer auslöst. Nur einwandfreie Sendesignale werden als gültig anerkannt, wie an sich im Stand der Technik bekannt.

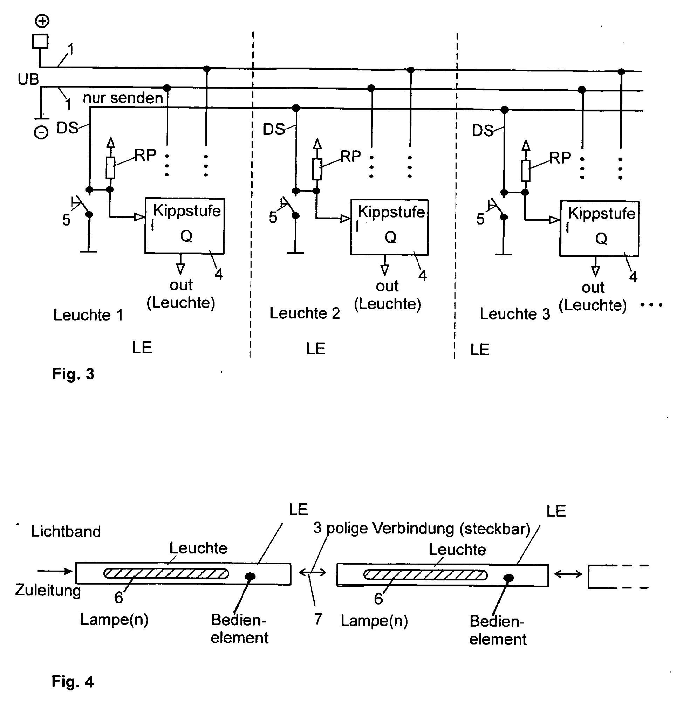

Zur Vermeidung von Sendekollisionen besteht eine Erfindungsausgestaltung nach Figur 3 darin, ohne Bidirektionalität auf der Datenund/oder Signalader bzw. -leitung DS einfachste, digitale Schaltungstechnik auf der Basis bidirektionaler Kippstufen 4 anzuwenden. Als bidirektionale Kippstufen 4 stehen beispielsweise an sich bekannte JK-Flip-Flops zur Verfügung. Der jeweilige Ansteuereingarig 1 der Leuchteinheit-Kippstufe 4 ist parallel zu einem Pull-Up-Widerstand RP mit einem jeweiligen Tastschalter 5 verbunden, mit welchem sich die (in Figur 3 nicht dargestellten) Leuchtmittel der jeweiligen Leuchte LE einschalten lassen. Dazu gibt die Kippstufe 4 bei entsprechender Ansteuerung am Eingang I ein Steuersignal auf die nicht dargestellten Leuchtmittel über entsprechende Leistungsstellglieder aus (letztere ebenfalls in Figur 3 nicht dargestellt). Das vom jeweiligen Tastschalter 5 in Verbindung mit einem Pull-Up-Widerstand RP ausgelöste Stellsignal einer Leuchteinheit LE wird über die den Leuchteinheiten LE gemeinsame Daten- und/oder Signalader DS den anderen Leuchteinheiten übermittelt, so dass die jeweiligen Kippstufen 4 der anderen Leuchten LE ebenfalls zum Leuchten angesteuert werden. Die Stromversorgung für die Kippstufen 4 wird von den Leistungsadern 1 zur Verfügung gestellt, an welche die Kippstufen 4 mit Stromversorgungsklemmen parallel angeschaltet sind (vgl. Betriebsspannung UB in Figur 3).

In Figur 4 ist veranschaulicht, wie einzelne, längliche Leuchteinheiten LE mit jeweiligen Leuchtmittein 6 über dreipolige Steckverbindungen 7 sich zu einem Lichtband z. B. für die Unterseite eines Küchenoberschrankes oder zur Arbeitsplatzbeleuchtung zusammenstecken lassen. Die drei Pole entsprechen den beiden Leistungsadern 1 und der Datenund/oder Signalader DS gemäß Figuren 1-3. Die jeweiligen länglichen, zweckmäßig röhrenförmigen Leuchteinheiten LE sind an beiden Enden mit Steckverbindungen für benachbarte Leuchteinheiten oder für eine Stromversorgungs-Zuleitung ausgerüstet.

Alternativ oder zusätzlich zur in Figur 4. dargestellten Serien-Steckverbindung der Leuchteinheiten ist für letztere auch eine Kopplung in Sternstruktur beispielsweise über einen Steckverteiler im Rahmen der Erfindung gegeben. Dadurch ist eine sternartige Einspeisung der Stromversorgung und/oder von Daten oder sonstigen Informationssignalen ermöglicht. Eine konkrete Realisierung besteht darin, jede einzelne Leuchteinheit des Netzwerks mit einem separaten, beispielsweise dreiadrigen Kabel mit dem beispielsweise dreipoligen Steckverteiler als Sternpunkt zu verbinden.

Alternativ oder zusätzlich zur in Figur 4 dargestellten, baulich integrierten Anbrigung der Bedienelemente beispielsweise an der Außenhaut der jeweiligen Leuchteinheit können die Bedienelemente auch von den Leuchteinheiten getrennt, beispielsweise als separates Bedienmodul, angeordnet und gegebenenfalls nur elektrisch mit dem Leuchten-Informationsfluß gekoppelt sein, sei es in Serien-, Stern- oder sonstiger Busstruktur. Die Leuchteinheiten können sowohl einzeln für sich, aber auch von einer einzelnen Leuchteinheit und/oder vom Bedienmodul aus gemeinsam angesteuert werden. Dies betrifft vorzugsweise die Leuchtmittelsteuerung einer Leuchteinheit sowie die Helligkeit und Farbwahl des Lichtes.

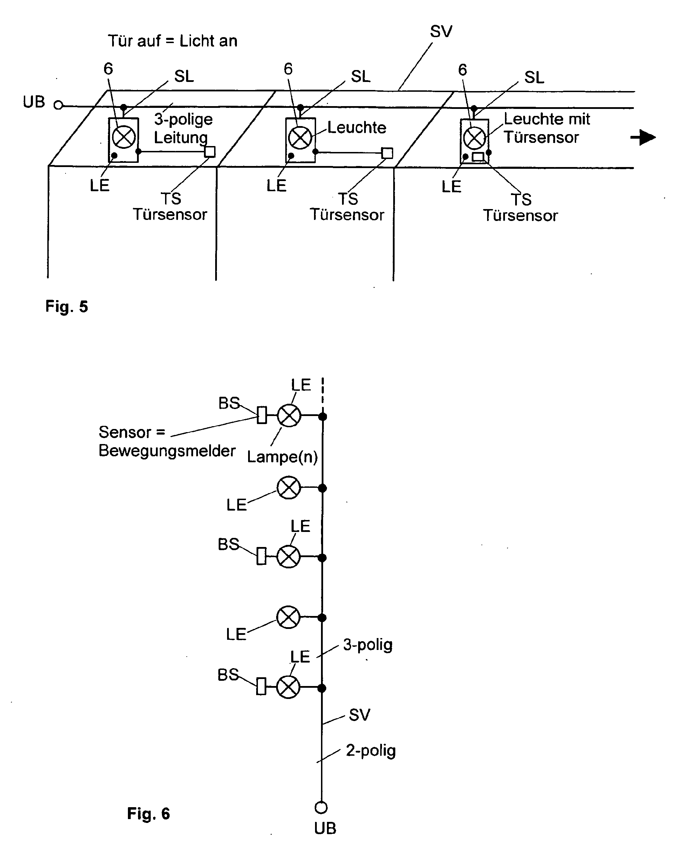

Eine weitere Erfindungsanwendung im Zusammenhang mit einer Kleiderschrankbeleuchtung ist in Figur 5 skizziert. Die Bedien- und/oder Sensorelemente sind in diesem Anwendungsbeispiel als Türsensoren TS ausgeführt, die jeweils in Wirkungsverbindung mit einer Leuchteinheit LE stehen, teilweise aber von dieser räumlich entfernt und teilweise mit dieser baulich integriert angeordnet sind. Aufgrund einer jeweiligen Informationssignal-Leitung SL aus den Leuchten LE zu der Daten- und/oder Signalader DS der dreipoligen Stromversorgungsschiene SV mit Leistungs- und Daten- und/oder Signaladern 1, DS lässt sich die Funktion realisieren, dass beim Aufmachen einer Schranktüre sich alle Leuchtmittel 6 gleichzeitig einschalten.

Analog funktioniert das in Figur 6 skizzierte Anwendungsbeispiel für eine Treppenhaus- oder Flurbeleuchtung. Zum einen ist erkennbar, dass im Rahmen der Erfindung nicht alle Leuchteinheiten LE mit einem Bedien- und/oder Sensorelement BS, beispielsweise Bewegungsmelder, ausgestattet sein müssen. Wichtig ist jedoch, dass das Bedien- und/oder Sensorelement BS stets mit der Leuchteinheit LE bzw. einer etwa dort ausgebildeten Steuerung in Wirkungsverbindung steht. Ferner ist dargestellt, dass die Dreipoligkeit der Stromversorgungsschiene SV nur zwischen den am Netzwerk teilnehmenden Leuchteinheiten LE realisiert sein muss, insbesondere um ein zeitgleiches Einschalten der Leuchteinheiten LE bzw. deren Leuchtmittel 6 zu ermöglichen. Dies beruht auf die Übermittlung eines Einschaltbefehls, sensiert von einem Bedien- und/oder Sensorelement BS, von der zugeordneten Leuchteinheit LE über den dreipoligen Abschnitt (versehen mit dem Informationsübermittlungskanal) der Stromversorgungsschiene SV an alle übrigen, am Netzwerk teilnehmenden Leuchteinheiten LE Die Interpretation des von einer Leuchteinheit LE ausgehenden Einschalt- oder auch Ausschaltbefehls lässt sich in der jeweiligen anderen Leuchteinheit LE individuell je nach Benutzeranforderung mittels Jumper, "Modis" oder sonstigen Kodierschaltern konfigurieren. So kann eine Leuchteinheit, selbst wenn sie an die gemeinsame Stromversorgungsschiene SV angeschlossen ist, autonom bzw. isoliert von den anderen Leuchteinheiten LE bzw. den davon ausgehenden Befehls- oder Datentelegrammen betrieben werden, wenn sie per Kodierschalter dazu eingestellt ist.

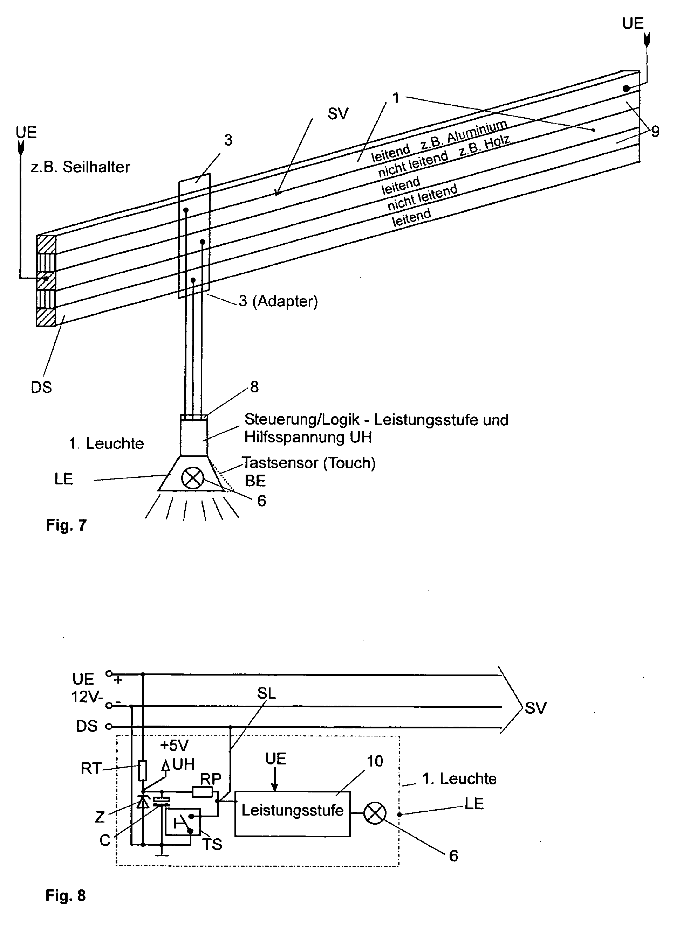

Eine weitere Erfindungsanwendung ist schematisch in Figur 7 skizziert. Eine als Hängeleuchte ausgebildete Leuchteinheit LE ist hängend an eine Stromversorgungsschiene SV angeschlossen. Dem Anschluss dient bei der Leuchteinheit LE ein Anschlussglied 8 mit drei Anschlusspolen oder -klemmen, wovon drei Drähte zu einem an der Stromversorgungsschiene SV befestigten Anschlussadapter 3 geführt sind. Die Drahtenden stehen mit drei Leitersträngen 1, DS der Stromversorgungsschiene SV in Eingriff, zwischen welchen zwei Isolierstränge 9 aus Holz beispielsweise gleichsam als Abstandshalter verlaufen. Einer der Leiterstränge bildet die Daten- und Signalader bzw. Informationssignalader DS. Am sich kegelartig erweiternden Gehäuse der angeschlossenen Leuchteinheit LE ist als Bedien- und/oder Sensorelement BE ein Tastsensor von außen manuell zugänglich angebracht. Der Ausgang des Bedien- und/oder Sensorelements BE bzw. Tastsensors ist mit einem (nicht sichtbare) Steuer-Schaltwerk gekoppelt, das baulich im Inneren der Leuchteinheit LE zum Betätigen des Leuchtmittels 6 gegebenenfalls über ein (nicht sichtbares) Leistungsstellglied angeordnet ist. Ein vom Bedien- und/oder Sensorelement BE ausgelöstes Leucht-Einschaltsignal braucht sich so nicht nur auf die Leuchtmittel 6 der jeweils zugeordneten Leuchteinheit LE auszuwirken, sondern kann über die weiter unten noch näher beschriebene Informationssignal-Leitung der Leuchteinheiten zur Informationssignal-Ader DS der Stromversorgungsschiene SV und von dort aus weiter zu anderen am Netzwerk teilnehmenden Leuchteinheiten weitergereicht werden, wodurch sich zeitgleich Leuchtmittel anderer Leuchteinheiten betätigen lassen.

Gemäß Figur 8 ist eine von mehreren Leuchteinheiten LE mit einem Leistungsstellglied 10 zur Betätigung eines Leuchtmittels 6 versehen. Das Leistungsstellglied 10 wird von der Stromversorgungsschiene SV aus mit der Gleichstrom-Eingangsspannung UE beispielsweise in der Höhe von 12 Volt versorgt und dient der Betätigung des Leuchtmittels 6 der Leuchteinheit LE. Der Eingang der Leistungsstufe bzw. des Leistungsstellgliedes 10 ist mit mehreren Komponenten bzw. Elementen parallel verbunden: Über einen Pull-Up-Widerstand RP ist er mit einer Hilfsspannung UH verbunden, welche von der 12 Volt-Eingangsspannung UE der Stromversorgungsschiene SV in an sich bekannter Weise mit einer Spannungsstabilisierungsschaltung, bestehend aus Spannungsteilerwiderstand RT, Zenerdiode Z und Kondensator C abgeleitet ist. Weiter ist der Eingang der Leistungsstufe 10 mit dem Ausgang eines Bedienund/oder Sensorelements BS in Form eines Tastschalters oder Türsensors TS verbunden. Dieser kann beispielsweise im Zusammenhang mit einer Schrank-Innenbeleuchtung mit der Schranktüre gekoppelt sein und beim Schließen der Schranktüre geschlossen werden, so dass am Eingang des Leistungsstellglieds 10 die Hilfsspannung UH beispielsweise in Höhe von 5 Volt anliegt. Dadurch wird vom Leistungsstellglied 10 das Leuchtmittel 6 betätigt. Schließlich ist noch an den Eingang des Leistungsstellglieds 10 eine Informationssignal-Leitung SL gelegt, welche zur Daten- und Signalader DS der Stromversorgungsschiene SV geführt und mit dieser verbunden ist. Ein Steuer-Schaltwerk oder eine besonders ausgeprägte Logikeinheit ist bei dieser erfindungsgemäßen Ausführungsform nicht notwendig. Werden die beispielhafte Schranktüre und damit der Tastschalter DS geschlossen, wird das entsprechende Befehlssignal nicht nur dem Leistungsstellglied 10 der direkt zugeordneten Leuchte LE, sondern auch über die Informationssignalleitung SL und die Informationssignal-Ader DS zu einer oder mehreren weiteren Leuchteinheiten durchgeführt, welche dieses Befehlssignal entsprechend ihrer jeweiligen Einstellung interpretieren und umsetzen können.

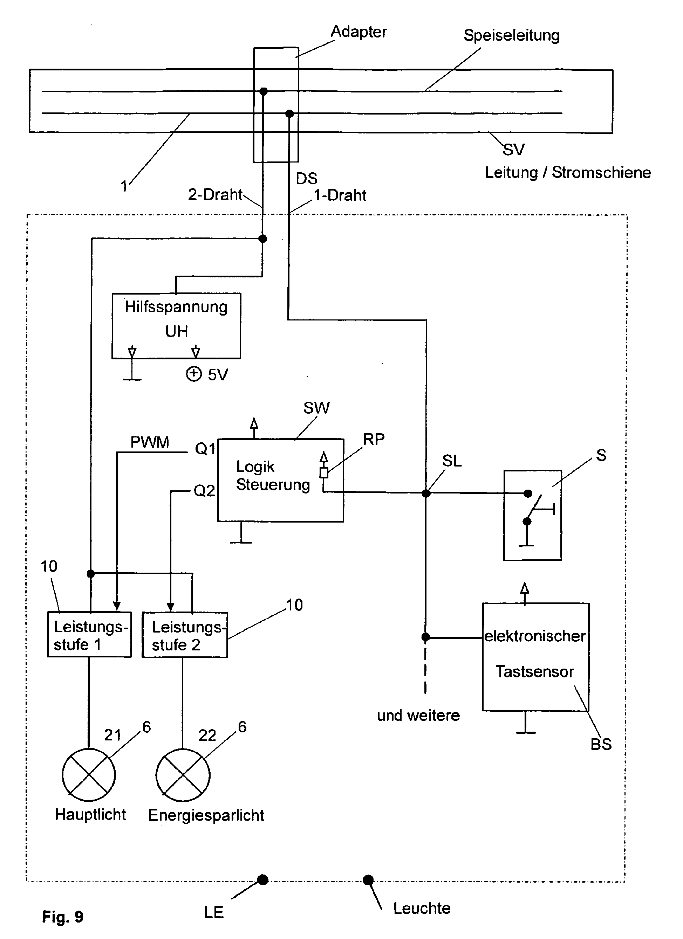

Die Schaltungsstruktur der Leuchteinheit LE gemäß Figur 9 unterscheidet sich von der gemäß Figur 8 hauptsächlich durch die Zwischenschaltung einer Logik-Steuerung bzw. eines Steuer-Schaltwerks SW mit eingangsseitigem Pull-Up-Widerstand RP. Dieser ist mit der Informationssignal-Leitung SL verbunden, an welcher beispielsweise ein handbetätigbarer Schalter S, ein elektronischer Tastsensor als weiteres Bedien- und/oder Sensorelement BS, die Informationssignalader DS der Stromversorgungsschiene SV usw. jeweils parallel anliegen. Die Ausgangssignale Q1, Q2 des Steuer-Schaltwerks SW können zumindest bei einem Haupt-Leuchtmittel zur Erzielung einer Dimm-Fähigkeit mit einem Pulsweiten-Modulationssignal PWM gebildet sein. Die beiden Leistungsstellglieder 10 sind zu ihrer Stromversorgung jeweils direkt mit den Speise- bzw. Leistungsadern 1 der Stromversorgungsschiene SV verbunden. Für die Stromversorgung des Steuer-Schaltwerks SW wird beispielsweise analog zur Figur 8, von den Leistungsadern 1 eine Hilfsspannung UH in Höhe von 5 Volt abgeleitet.

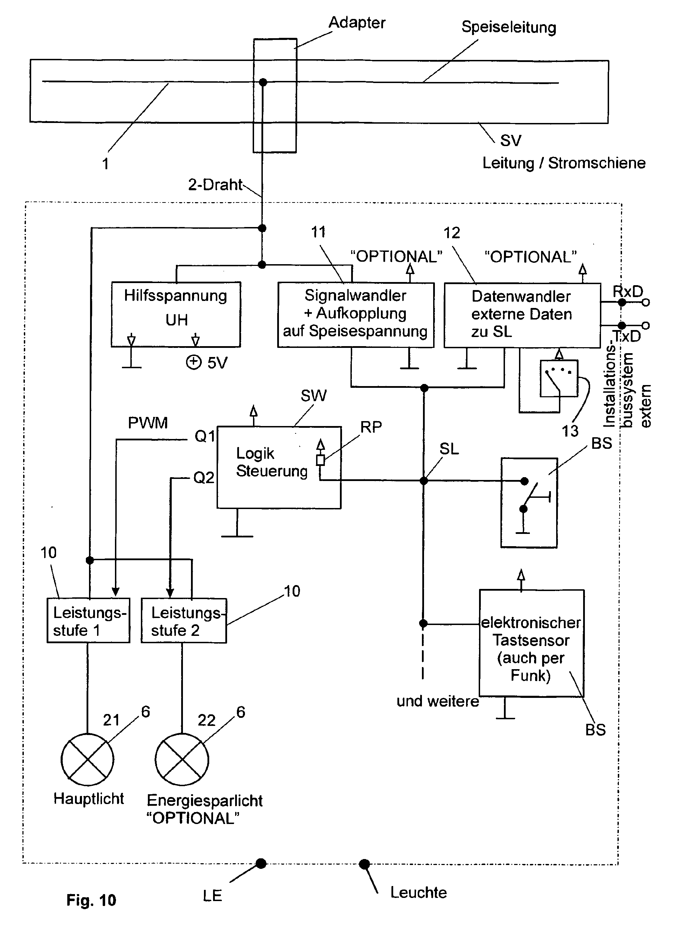

Die Schaltungsanordnung der Leuchteinheit gemäß Figur 10 unterscheidet sich von der nach Figur 9 im Wesentlichen durch Einsatz und Verarbeitung einer Frequenzmodulation. Auch andere Modulationsarten liegen im Rahmen der Erfindung. Aus dem anfangs genannten Stand der Technik ist eine Stromversorgungsschiene, der ein frequenzmoduliertes Informations- oder Datensignal eingeprägt bzw. überlagert ist, bekannt. Dem entsprechend ist gemäß Figur 10 die Stromversorgungsschiene SV nur mit zwei Leistungsadern 1 versehen, welche ein frequenzmoduliertes Informationssignal umfassen. Zur Demodulation ist ein Signalwandler 11 mit der Zweidraht-Leitung der Stromversorgungsschiene SV, neben der Hilfsspannungserzeugung UH, verbunden. Am Ausgang des Signalwandlers 11 ist die Informationssignalleitung SL der Leuchteinheit LE zum Empfang demodulierter Daten- bzw. Informationsströme angeschlossen. Parallel dazu liegt an der Informationssignalleitung SL der Ausgang bzw. die Innenschnittstelle eines Datenkonverters 12. Dessen Außenschnittstellen RxD (serieller Datenempfang) und TxD (serielles Senden von Daten) dienen dem Anschluss eines externen Bussystems, insbesondere von Installationsbussystemen wie z. B. DALI, EIB usw. Beide Module "Signalwandler 11" und "Datenkonverter 12" werden von der Hilfsspannungseinrichtung UH aus mit Strom versorgt.

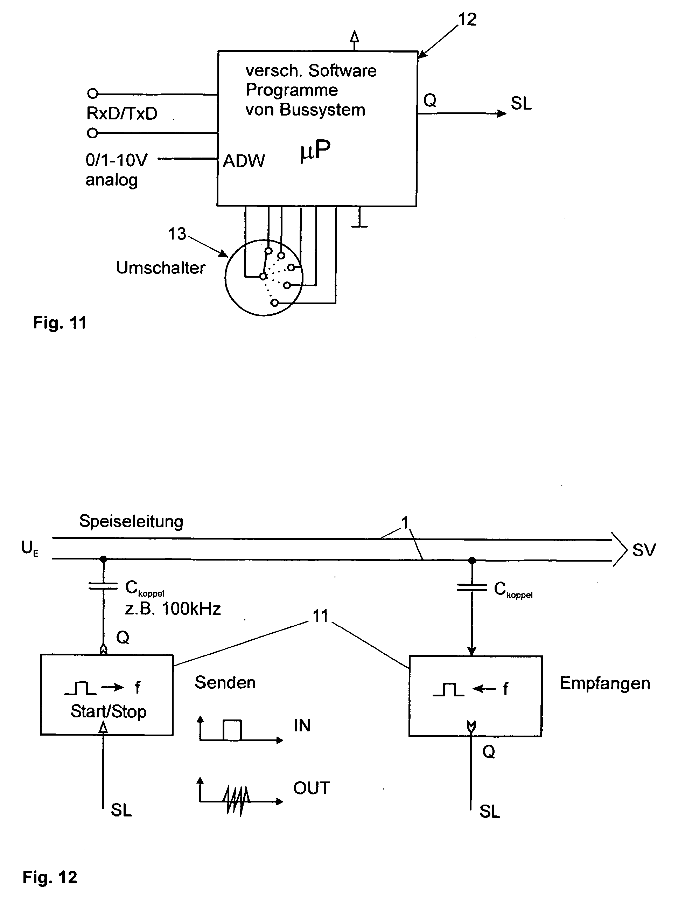

Gemäß Figuren 10 und 11 ist an dem Datenkonverter 12 eine manuell bedienbare Einstelleinrichtung 13 angeschlossen. Diese gibt je nach manueller Verstellung, beispielsweise Drehstellung, binäre Einstellcodes zur Eingabe in den Datenkonverter 12 aus. Gemäß Figur 11 ist der Datenkonverter mit einem Mikroprozessor-Baustein µP realisiert, der zusätzlich noch eine Analog/Digitalwandler-Schnittstelle ADW aufweisen kann. Darüber könnten externe analoge Steuersignale von beispielsweise 0 Volt bis 10 Volt in binärcodierte Daten und Befehle umgesetzt werden. In den Speicherbereichen des Mikroprozessor-Moduls µP können ferner diverse Datenkonvertierungsroutinen für unterschiedliche Bussysteme auf Vorrat geladen sein und je nach Stellung der Einstelleinrichtung 13 aktiviert werden.

Gemäß Figur 12 arbeitet der Signalwandler 11 als Frequenz-Modulator bzw. -Demodulator, wobei die Kopplung mit den Leistungsadern bzw. Speiseleitungen 1 der Stromversorgungsschiene SV, welche die frequenzmodulierten Signale zu dem Versorgungsstrom überlagert führen, über jeweilige Koppelkondensatoren Cₖₒₚₚₑₗ an den Signalwandler erfolgt. In diesem Zusammenhang ist der an sich bekannte Einsatz von Phasenregelkreisen zweckmäßig.

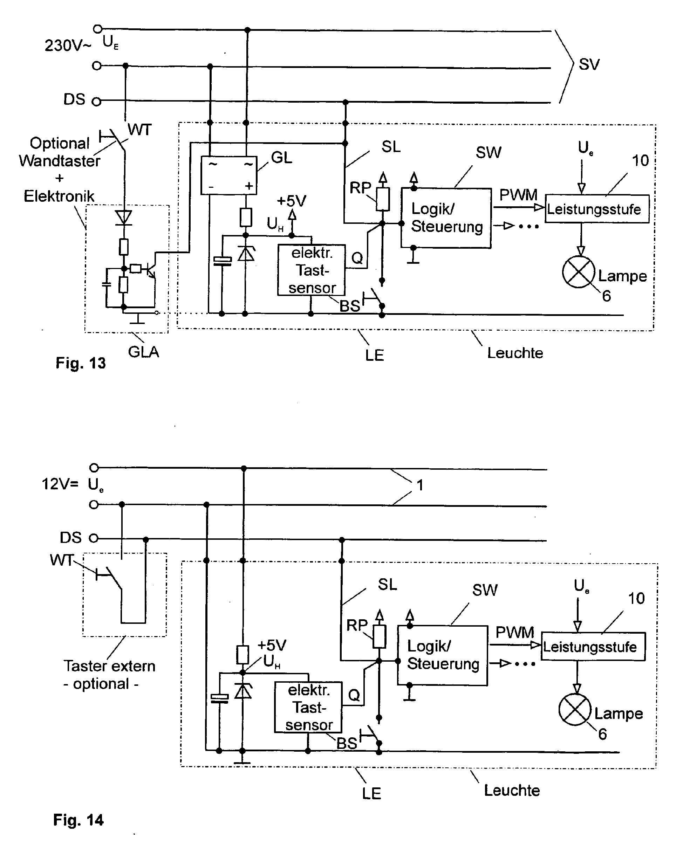

Gemäß Figur 13 liegt im Rahmen der Erfindung der Einsatz einer Stromversorgungsschiene SV, welche Netzspannung mit 230 Volt Wechselstrom führt. Über einen Gleichrichter GL wird die Einrichtung zur Erzeugung der Hilfsspannung UH zur Erzeugung von 5 Volt für Bedien- und/oder Sensorelemente BS und das Steuerschaltwerk SW innerhalb der Leuchteinheit LE gespeist. Ferner bildet ein externes Bedien- und/oder Sensorelement beispielsweise in der Ausführung als Wandtaster WT einen Netzwerkknoten des erfindungsgemäßen Leuchtennetzwerks. Der Wandtaster WT ist einerseits mit einer 230 Volt-Phase in der Stromversorgungsschiene SV verbunden. Seine andere Anschlussklemme ist mit dem Eingang einer Gleichrichter-Anpassungsschaltung GLA mit Diode, Transistor, Widerstände und Kondensator in der gezeichneten. Struktur verbunden. Der Ausgang der Gleichrichter-Anpassungsschaltung GLA ist auf die Informationssignalleitung SL bzw. die Daten- und Signalader der Stromversorgungsschiene SV geführt. Damit kann eine bei Betätigung des Wandtasters WT erfolgende Signalauslösung an die Leuchteinheit LE und weitere (nicht gezeichnete) Leuchteinheiten des Netzwerks weitergeleitet werden zur jeweiligen Verarbeitung und Umsetzung.

Die Netzwerkanordnung gemäß Figur 14 unterscheidet sich von der nach Figur 13 durch die Verwendung einer Versorgungs-Gleichspannung von 12 Volt in der Stromversorgungsschiene SV. Dadurch vereinfacht sich die schaltungstechnische Anbindung des externen, Netzwerkknoten bildenden Wandtasters WT: Mit einer Anschlussklemme ist dieser an einen Pol der 12 Volt-Versorgungsspannung aus der Stromversorgungsschiene SV gelegt, und mit der anderen Anschlussklemme an die Daten- und Signalader DS. Bei Schließen des Wandtasters wird infolgedessen die Daten- und Signalader DS auf das 12 Volt-Potential der Stromversorgungs-Eingangs-Gleichspannung UE gebracht. Über die Informationssignal-Leitung SL, welche direkt mit der Daten- und Signalader DS der Stromversorgungsschiene SV verbunden ist, erreicht das Auslösesignal vom Wandtaster WT den Eingang des Steuer-Schaltwerks SW zur weiteren Verarbeitung. Für einfache Funktionen ist ein JK-Kippglied als Steuer-Schaltwerk SW ausreichend, für anspruchsvollere Funktionen wie z. B. stufenloses Dimmen und/oder Gedächtnisfunktionen bieten sich Mikroprozessor-Module an, die auf dem Markt kostengünstig erhältlich sind.

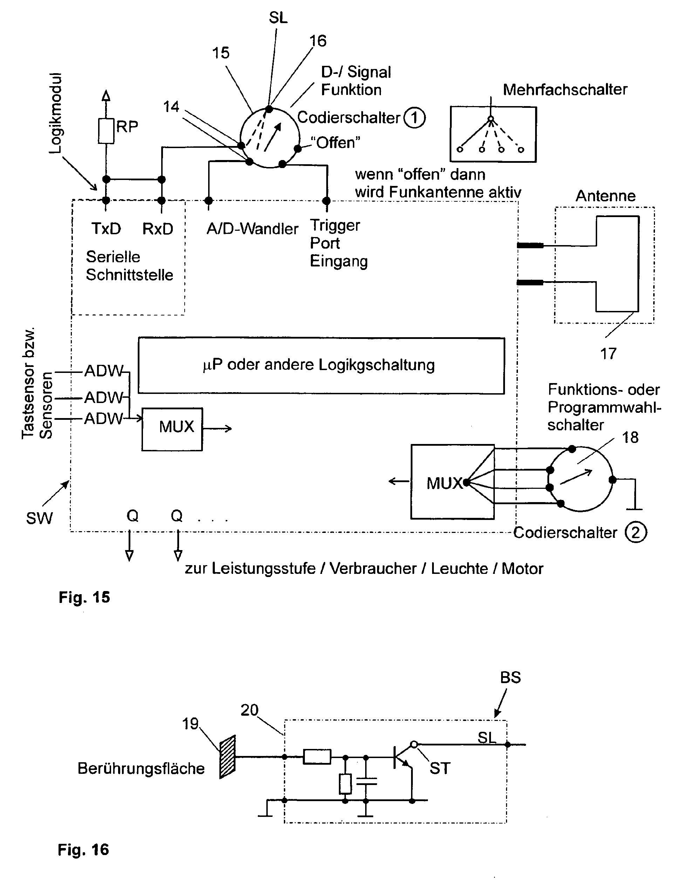

Gemäß Figur 15 ist als Steuerungs-Schaltwerk SW eine Logikschaltung, vorzugsweise ein Mikrocontroller µP eingesetzt. Dessen Datensendeschnittstelle TxD, Datenempfangsschnittstelle RxD, Analog/Digitalwandler-Schnittstelle ADW und dessen Trigger-Port bzw. Interrupt-Eingang sind jeweils an einem der mehreren individuellen Anschlusspins eines Signal-Umschalters 15 angeschlossen. Einer der individuellen Anschlusspins 14 ist gemäß gezeichnetem Ausführungsbeispiel noch "offen". Der den individuellen Anschlusspins 14 gemeinsam zugeordnete Kollektiv-Anschlusspin 16 ist direkt mit der internen Informationssignal-Leitung SL der jeweiligen (nicht gezeichneten) Leuchteinheit verbunden. Durch diesen Signalumschafter 15 ist es möglich, Daten- und/oder Steuerungssignale unterschiedlichster Kategorien dem Steuer-Schaltwerk SW zuzuleiten oder von diesem zu versenden: Analoge Steuerspannungen von 0-10 Volt, wobei die Informationssignal-Leitung SL vom Signal-Umschalter 15 (zweckmäßig manuell verstellbar) zum Individual-Anschlusspin 14 für den Eingang des Analog/Digitalwandlers ADW des Mikroprozessors µP durchgeschaltet ist; flankengesteuerte Trigger-Signale (z. B. als "Start/Stopp" oder "Ein/Aus" in der Mikroprozessor-Software interpretierbar) am Trigger/Interrupt-Port-Eingang des Mikroprozessors µP, wobei durch Programmunterbrechung Software-Routinen höherer Priorität gestartet werden können, wenn der Kollektiv-Anschlusspin 16 zum entsprechenden Individual-Anschlusspin 14 verstellt ist; serieller, binärer Daten-Sende- und Empfangsbetrieb über die entsprechenden Mikroprozessor-Schnittstellen TxD, RxD (beide sind extern miteinander verbunden), wenn der Kollektiv-Anschlusspin 16 über entsprechende Signal-Umschalterverstellung mit dem entsprechenden Individual-Anschlusspin 14 kurzgeschlossen ist. Zahlreiche weitere Anwendungen des Signal-Umschalters 15 an den Schnittstellen des Mikroprozessors µP liegen in der Reichweite des Fachmanns. Zusätzlich können noch weitere Schnittstellen angeordnet und verwendet sein, wie beispielsweise eine Funkschnittstelle mit der Antenneneinrichtung 17, so dass im Leuchtennetzwerk unterschiedliche Leuchteinheiten drahtlos miteinander kommunizieren könnten. Ferner ist eine Kodierschalter-Eingabe 18 gezeichnet, die an sich aus dem Stand der Technik bekannt ist und der Konfiguration der Leuchteinheit-Steuerung zur Anpassung an individuelle Benutzerwünsche dienen kann. Ferner können noch zusätzliche Analog-Eingangsschnittstellen ebenfalls über Analog/Digitalwandler ADW für Tastschalter, Tastsensoren usw. vorgesehen sein. Intern im Mikroprozessor µP können diese mehreren Analog/Digitalwandler-Eingänge ADW über einen Multiplexer MUX koordiniert abgefragt werden.

In Figur 16 ist die Realisierung des Bedien- und/oder Sensorelements als Tastsensor skizziert. Der Ausgang einer sensierenden Berührungsfläche 19 ist einer Signalaufbereitungsschaltung 20 zugeführt, welche ein Spannungsteiler/Tiefpass-Netzwerk mit nachgeschaltetem Schalttransistor ST umfasst. Dessen Kollektorausgang ist direkt mit der Informationssignal-Leitung SL verbunden.

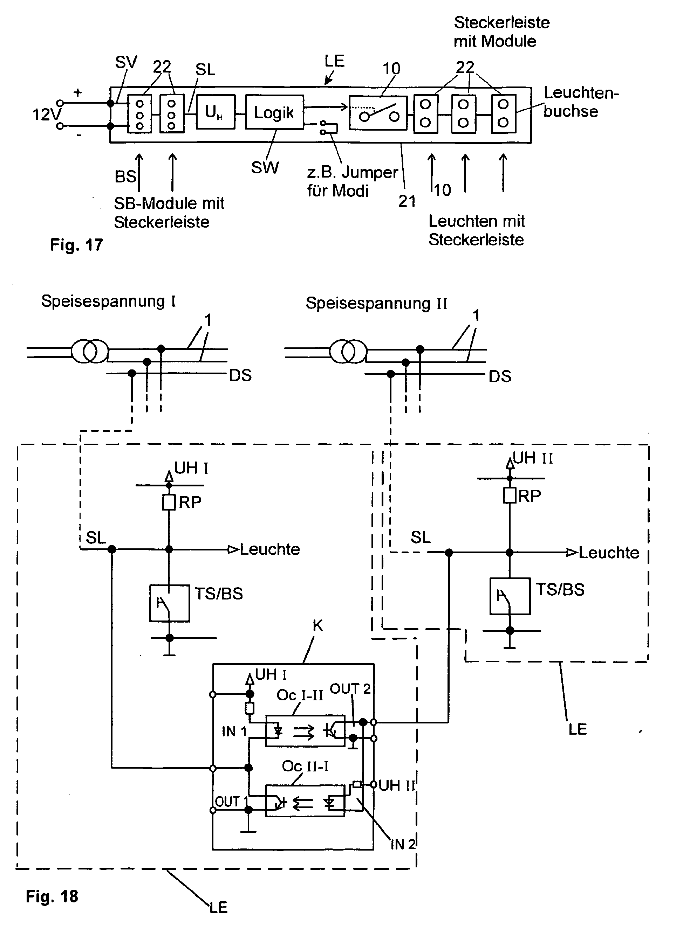

Gemäß Figur 17 ist die Leuchteinheit LE mit einem Gehäuse oder einem Rahmen oder Chassis 21 gestaltet, welches eine Art "Steckerleiste" mit mehreren Buchsenleisten 22 bildet. Im gezeichneten Ausführungsbeispiel sind dreipolige Buchsenleisten für Bedien- und/oder Sensorelemente BS vorgesehen. Zwei Pole sind einer gemäß Figur 17 12 Volt-Gleichstromversorgung zugeordnet, und der dritte Pol dient der Verbindung zur erfindungsgemäßen Informationssignal-Leitung SL, welche mit dem Eingang des Steuer-Schaltwerks SW in Verbindung steht. Letztere wird mit einer Hilfsspannung UH betrieben, welche von der Versorgungs-Eingangsspannung 12 Volt abgeleitet ist. Die zweipoligen Buchsenleisten 22 sind einsteckbaren Leuchtmitteln zugeordnet. Letztere werden, wie oben erläutert, vom Steuer-Schaltwerk SW mittelbar über Leistungsstellglieder 10 betätigt und benötigen deshalb keinen dritten Anschlusspol bzw. keine dritte Anschlussklemme zur Verbindung mit der Informationssignal-Leitung SL. Die beiden Anschlussklemmen bzw. -pole der Buchsenleiste 22 für die Leuchtmittel sind den Plus- und Minus-Polen der 12 Volt-Gleichstromversorgung zugeordnet.

Gemäß Figur 18 ist eine Leuchteneinheit Le mit einer galvanisch getrennten Kopplungseinheit K versehen, die zwei zueinander bidirektional ausgerichtete Optokoppler Oc I-II bzw. Oc II-I aufweist. Mit dem ersten Optokoppler Oc I-II ist es möglich, aus der Leuchteinheit LE, die einem Netzwerk 1 angehört, Information galvanisch getrennt zur Leuchteneinheit LE eines benachbarten Netzwerkes II zu übertragen. Analog ist es mit dem zweiten Optokoppler Oc II-I entgegengesetzt ausgerichteter Signafrichtung möglich, Informationen vom benachbarten Netzwerk II in der Leuchteneinheit LE des ersten Netzwerk I zu empfangen und dort über die Signalleitung SI an den Informationskanal DS in der Stromversorgungsschiene SV weiterzuverbreiten.

Beim Ausführungsbeispiel der Figur 18 wird der Vorteil erzielt, dass unterschiedliche Leuchteinheiten beziehungsweise Netzwerkknoten mit unterschiedlichen Versorgungsspannungen (öffentliches 230-Wechselstromnetz, 12 Volt-Gleichspannung, Solar-/Akkuversorgung) kommunizieren oder sonst zusammenwirken können. Eine entsprechende, galvanisch getrennte Kopplung ist beim Ausführungsbeispiel der Figur 15 gegeben.

### Bezugszeichenliste

- LE: Leuchteinheit
- BS: Bedien- und/oder Sensorelement
- 1: Leistungsader
- SV: Stromversorgungsschiene
- DS: Daten- und/oder Signalader, Informationssignalader
- 2: Steckbuchse
- 3: Anschlussadapter
- 4: bidirektionale Kippstufe
- Q: Kippstufen-Ausgang
- I: Kippstufen-Ansteuereingang
- RP: Pull-Up-Widerstand
- 5: Tastschalter
- 6: Leuchtmittel
- 7: dreipolige Steckverbindung
- TS: Türsensor
- UB: Betriebsspannung
- 8: Anschlussglied
- 9: Isolierstrang
- UE: Eingangsspannung
- 10: Leistungsstellglied
- UH: Hilfsspannung
- RT: Spannungsteilerwiderstand
- Z: Zenerdiode
- C: Kondensator
- SL: Informationssignalleitung
- SW: Steuer-Schaltwerk
- S: Schalter
- Q1, Q2: Schaltwerk-Ausgangssignale
- PWM: Pulsweitenmodulationssignal
- 11: Signalwandler
- 12: Datenkonverter
- 13: Einstelleinrichtung
- µP: Mikroprozessor-Modul
- ADW: Analog-Digitalwandler-Schnittstelle
- GL: Gleichrichter
- WT: Wandtaster
- GLA: Gleichrichter-Anpassungsschaltung
- 14: individueller Anschlusspin
- 15: Signal-Umschalter
- 16: Kollektiv-Anschlusspin
- 17: Antenneneinrichtung
- 18: Codierschalter-Eingabe
- MUX: Multiplexer
- 19: sensierende Berührungsfläche
- 20: Signalaufbereitungsschaltung
- ST: Schalttransistor
- 21: Chassis
- 22: Buchsenleiste
- K: Kopplungseinheit
- Ocl-II: Optokoppler vom Netzwerk I zum Netzwerk II
- OclI-I: Optokoppler vom Netzwerk II zum Netzwerk I

## Patentansprüche

1. Elektronisch steuerbare Leuchteinheit (LE) für ein Leuchtennetzwerk, insbesondere zur Anbringung an Möbel, mit einem oder mehreren Leuchtmitteln (6), die von einem jeweils zugeordneten Leistungsstellglied (10) betätigbar sind, mit wenigstens einem digitalen Steuer-Schaltwerk (SW), das mit einer Kommunikationsschnittstelle zum Empfang, zur Verarbeitung und/oder zum Senden von Steuerungsbefehlen und/oder -daten versehen oder verbunden und über einen Ausgang mit dem oder den Leistungsstellgliedem (10) zu deren Ansteuerung gekoppelt ist, und mit einem Anschlussglied (3,8) zur Ankopplung an eine Stromversorgungseinrichtung (SV), **dadurch gekennzeichnet, dass** die Kommunikationsschnittstelle eine Informationssignal-Leitung (SL) mit einem oder mehreren Drähten aufweist, die sowohl mit dem Anschlussglied (3,8) als auch mit einem oder mit mehreren Verbindungselementen verbunden ist, die der Ankopplung von einem oder mehreren Bedien- und/oder Sensorelementen (BS) an die Leuchteinheit (LE) dienen, wobei die Leuchteinheit (LE) ausgebildet ist, um ein von einer anderen Leuchteinheit ausgehendes Befehlssignal zu inter pretieren, um basierend auf dem Befehlssignal über das Leistungsstellglied (10) ein Steuersignal auf die oder das Leuchtmittel (6) aufzugeben.

2. Elektronisch steuerbare Leuchteinheit (LE) gemäß Anspruch 1 **dadurch gekennzeichnet, dass** die Leuchteinheit (LE) ausgebildet ist, um ein Befehlssignal, sensiert von den ein oder mehreren Bedien- und/oder Sensorelementen, über das Anschlussglied an am Leuchtennetzwerk teilnehmende Leuchtelemente zu übermitteln.

3. Elektronisch steuerbare Leuchteinheit (LE) gemäß Anspruch 2, **dadurch gekennzeichnet, dass** sie ferner eine Kippstufe (4) aufweist, welche ausgebildet ist, um basierend auf dem von der anderen Leuchteneinheit ausgehenden Befehlssignal über das Leistungsstellglied das Steuersignal auf die Leuchtmittel aufzugeben.

4. Elektronish steuerbare Leuchteinheit (LE) nach einem der Ansprüche 1 bis 3, **dadurch gekennzeichnet, dass** das oder die Bedien- und/oder Sensorelemente (BS) und das Stromversorgungs-Anschlussglied (3,8) parallel mit der Informationssignal-Leitung (SL) verbunden ist.

5. Elektronish steuerbare Leuchteinheit (LE) nach einem der Ansprüche 1 bis 4, **dadurch gekennzeichnet, dass** die Informationssignal-Leitung (SL) als der Leuchteinheit (LE) interner Ein- oder Mehrdraht-Bus für das Schaltwerk (SW), das oder die Bedienelemente (BS) und das Anschlussglied (3,8) ausgebildet ist.

6. Elektronish steuerbare Leuchteinheit (LE) nach einem der vorhergehenden Ansprüche, **dadurch gekennzeichnet, dass** die Bedien- und/oder Sensorelemente (BS) in die Leuchteinheit (LE) baulich derart integriert sind, dass sie von extern beeinflussbar sind.

7. Elektronish steuerbare Leuchteinheit, (LE) nach einem der vorhergehenden Ansprüche, **dadurch gekennzeichnet, dass** das oder die Leuchtmittel (6) in die Leuchteinheit (LE) baulich integriert sind.

8. Elektronish steuerbare Leuchteinheit (LE) nach einem der vorhergehenden Ansprüche, **gekennzeichnet durch** einen der Informationssignal-Leitung (SL) und dem Schaltwerk (SW) zwischengeschalteten Signal-Umschalter (15) mit einem gemeinsamen Kollektiv-Anschluss (16), der mit der Informationssignal-Leitung (SL) verbunden ist, und mit mehreren Individual-Anschlüssen (14), die je mit einem Ein- oder Ausgang oder einer Schnittstelle (ADW,RxD,TxD) des Schaltwerks (SW) und/oder wenigstens einem Analog-/Digitalwandler verbunden sind, wobei der Analog-/Digitalwandler ausgangsseitig mit dem Schaltwerk (SW) verbunden ist.

9. Elektronish steuerbare Leuchteinheit, (LE) gemäß Anspruch 8, **dadurch gekennzeichnet, dass** die individuellen Anschlüsse (14) des Signalumschalters (15) mit den jeweiligen Mikrocontroller-Schnittstellen (ADW,RxD,TxD) zur Analog-Digitalwandlung, Digital-Analogwandlung, Spannungs-Frequenzwandlung, Programmunterbrechung (Interrupt) und/oder Binärkodierung verbunden sind.

10. Elektronish steuerbare Leuchteinheit (LE) nach einem der vorhergehenden Ansprüche, wobei die Stromversorgungseinrichtung eine Stromversorgungsschiene aufweist, auf welche Informationssignale aufmoduliert sind, und der Kommunikationsschnittstelle ein an die Stromversorgungs-Informationssignale angepasstes Modem vorgeschaltet ist, **dadurch gekennzeichnet, dass** das Modem über die Informationssignal-Leitung mit dem Schaltwerk verbunden ist.

11. Elektronish steuerbare Leuchteinheit, (LE) nach einem der vorhergehenden Ansprüche, **gekennzeichnet durch** einen zur Kopplung mit externen Bussystemen ausgebildeten Informations- oder Datenkonverter (12) mit einer Innenschnittstelle, die mit der Informationssignal-Leitung (SL) verbunden ist, und mit einer oder mehreren Außenschnittstellen (RxD,TxD), die zugänglich zum Anschluss an das externe Busssystem angeordnet sind.

12. Elektronish steuerbare Leuchteinheit (LE) nach Anspruch 11, **gekennzeichnet durch** eine manuell bedienbare Einstelleinrichtung (13) zur Ausgabe binärer Einstellcodes für den Informations- oder Datenkonverter (12) abhängig vom änzukoppelnden externen Bussystem.

13. Elektronish steuerbare Leuchteinheit (LE) nach einem der vorhergehenden Ansprüche, **gekennzeichnet durch** eine Ausbildung als Steckerleiste mit einer oder mehreren lösbaren Steckaufnahmen (22) für modulartig ausgebildete Baukomponenten der Leuchteinheit (LE), in welchen Steckaufnahmen (22) zumindest ein oder mehrere Bedien- und/oder Sensorelemente (BS) und/oder Leuchtmittel (6) aufgenommen sind.

14. Elektronish steuerbare Leuchteinheit (LE) nach Anspruch 13, **dadurch gekennzeichnet, dass** die Steckerleiste von einer Stromversorgungsschiene (SV) durchsetzt ist.

15. Elektronish steuerbare Leuchteinheit (LE) nach einem der Ansprüche 1 bis 14, **dadurch gekennzeichnet, dass** das Anschlussglied (3,8) mit einer zwei-, drei- oder mehrpoligen Steckbuchse, Klemm- und/oder Steckeinrichtung (2) zur Kopplung mit einer Stromversorgungsschiene oder Stromversorgungseinrichtung (SV) ausgebildet ist.

16. Elektronish steuerbare Leuchteinheit nach einem der Ansprüche 1 bis 15, **dadurch gekennzeichnet, dass** die Informationssignal-Leitung (SL) mit einem oder mehreren Optokopplern oder sonstigen, vorzugsweise galvanisch getrennten Kopplungseinrichtungen (K) zur Informationsübertragung an externe Netzwerke (II) oder sonstige Empfänger verbunden ist.

17. Leuchtennetzwerk mit mehreren Leuchteinheiten (LE) gemäß einem der Ansprüche 1-16, als Netzwerkknoten, welche an eine gemeinsame Stromversorgungseinrichtung (SV) angeschlossen sind, in der auch ein Kanal zur Informationsübermittlung (DS) gebildet ist, **dadurch gekennzeichnet, dass** zumindest eine Leuchteinheit (LE) mit einem oder mehreren Bedienund/oder Sensorelementen (BS) versehen oder direkt gekoppelt ist und eine Informationssignal-Leitung (SL) mit einem oder mehreren Drähten aufweist, und die Informationssignal-Leitung (SL) sowohl mit dem oder den Bedien- und/oder Sensorelementen (BS) gekoppelt als auch mit dem Informationsübermittlungs-Kanal (DS) verbunden ist, wobei ein von einem Bedien- oder Sensorelement einer Leuchteinheit ausgelöstes Befehlssignal zu anderen am Leuchtennetzwerk teilnehmenden Leuchteinheiten weitergereicht wird.

## Claims

1. Electronically controllable lighting unit (LE) for a light network, in particular for attaching to furniture, comprising one or several illuminants (6) which may be operated by a respectively associated power positioning element (10), comprising at least one digital control switching unit (SW) provided with or connected to a communication interface for receiving, for processing and/or for transmitting control commands and/or data and coupled via an output to the one or several power positioning elements (10) for controlling the same, and to a connecting member (3,8) for coupling to a current supply means (SV), **characterized in that** the communication interface comprises an information signal line (SL) having one or several wires which is connected both to the connecting member (3,8) and also to one or several connecting elements, serving for coupling one or several operating and/or sensor elements (BS) to the lighting unit (LE), wherein the lighting unit (LE) is implemented to interpret a command signal originating from a different lighting unit to output a control signal to the one or the several illuminants (6) based on the command signal via the power positioning element (10).

2. Electronically controllable lighting unit (LE) according to claim 1, **characterized in that** the lighting unit (LE) is implemented to transfer a command signal sensed by the one or the several operating and/or sensor elements via the connecting member to lighting elements part of the light network.

3. Electronically controllable lighting unit (LE) according to claim 2, **characterized by** further comprising a flip flop (4) which is implemented to transmit the control signal to the illuminant, based on the command signal originating from the other lighting unit, via the power positioning elements.

4. Electronically controllable lighting unit (LE) according to one of claims 1 to 3, **characterized in that** the one or the several operating and/or sensor elements (BS) and the current supply connecting member (3,8) are connected in parallel to the information signal line (SL).

5. Electronically controllable lighting unit (LE) according to one of claims 1 to 4, **characterized in that** the information signal line (SL) is implemented as a bus for the switching unit (SW) having one or several wires and being internal to the lighting unit (LE), the one or the several operating elements (BS) and the connecting member (3,8).

6. Electronically controllable lighting unit (LE) according to one of preceding claims, **characterized in that** the operating and/or sensor elements (BS) are integrated structurally into the lighting units (LE) such that they may be influenced from the outside.

7. Electronically controllable lighting unit (LE) according to one of the preceding claims, **characterized in that** the one or the several illuminants (6) are structurally integrated into the lighting unit (LE).

8. Electronically controllable lighting unit (LE) according to one of the preceding claims, **characterized by** a signal changeover switch (15) connected between the information signal line (SL) and the switching unit (SW) comprising a common collective terminal (16) connected to the information signal line (SL) and having several individual terminals (14) connected each to an input or output or an interface (ADW,RxD,TxD) of the switching unit (SW) and/or at least one analog/digital converter, the analog/digital converter being connected to the switching unit (SW) on the output side.

9. Electronically controllable lighting unit (LE) according to claim 8, **characterized in that** the individual terminals (14) of the signal changeover switch (15) are connected to the respective microcontroller interfaces (ADW,RxD,TxD) for analog/digital conversion, digital/analog conversion, voltage frequency conversion, program interrupt and/or binary encoding.

10. Electronically controllable lighting unit (LE) according to one of the preceding claims, wherein the current supply means comprises a current supply rail onto which information signals are modulated and a modem is connected upstream from the communication interface and adapted to the current supply information signals, **characterized in that** the modem is connected to the switching unit via the information signal line.

11. Electronically controllable lighting unit (LE) according to one of the preceding claims, **characterized by** an information or data converter (12) implemented for coupling to external bus systems having an internal interface connected to the information signal line (SL) and having one or several exterior interfaces (RxD,TxD), arranged accessible for the terminal to the external bus system.

12. Electronically controllable lighting unit (LE) according to claim 11, **characterized by** a manually operable setting means (13) for outputting binary setting codes for the information or data converter (12) depending on the external bus system to be coupled.

13. Electronically controllable lighting unit (LE) according to one of the preceding claims, **characterized by** being implemented as a connected strip having one or several detachable connecter receivers (22) for module-type implemented building components of the lighting unit (LE), wherein in the connector receivers (22) at least one or several operating and/or sensor elements (BS) and/or illuminants (6) are received.

14. Electronically controllable lighting unit (LE) according to claim 13, **characterized by** the connector strip being interspersed by a power supply rail (SV).

15. Electronically controllable lighting unit (LE) according to one of claims 1 to 14, **characterized by** the connecting member (3,8) being implemented with a two, three or multi-pole connector circuit, clamping and/or connector means (2) for coupling to a current supply rail or current supply means (SV).

16. Electronically controllable lighting unit (LE) according to one of claims 1 to 15, **characterized by** the information signal line (SL) being connected to one or several opto-couplers or other preferably galvanically separated coupling means (K) for information transmission to external networks (II) or other receivers.

17. Light network comprising several lighting units (LE) according to one of claims 1-16 as network nodes, which are connected to a common current supply means (SV) in which also a channel for information transmission (DS) is implemented, **characterized by** the fact that at least one lighting unit (LE) is provided with one or several operating and/or sensor elements (BS) or directly coupled to the same and comprises an information signal line (SL) having one or several wires, and that the information signal line (SL) is both connected to the one or several operating and/or sensor elements (BS) and also connected to the information transmission channel (DS), wherein a command signal triggered by an operating or sensor element of a lighting unit is passed on to other lighting units which are part of the light network.

## Revendications

1. Unité de lampe (LE) à régulation électronique pour un réseau de lampes, en particulier destinée à être placée sur des meubles, avec une ou plusieurs ampoules (6) qui peuvent être actionnées, chacune, par un élément de réglage de puissance (10) associé, avec au moins un circuit de réglage numérique (SW) qui est pourvu d'une, ou raccordé à une, interface de communication pour recevoir, traiter et/ou envoyer des commandes et/ou données de réglage et couplé par une sortie à l'élément ou les éléments de réglage de puissance (10) pour son actionnement, et avec un élément de raccordement (3, 8) pour le couplage à un moyen d'alimentation de courant (SV), **caractérisée par le fait que** l'interface de communication présente une ligne de signal d'informations (SL) avec un ou plusieurs fils qui est raccordée tant à l'élément de raccordement (3, 8) qu'à un ou plusieurs éléments de connexion qui servent au couplage d'un ou plusieurs éléments de commande et/ou capteurs (BS) à l'unité de lampe (LE), l'unité de lampe (LE) étant réalisée pour interpréter un signal de commande issu d'une autre unité de lampe, pour sortir, sur base du signal de commande, par l'intermédiaire de l'élément de réglage de puissance (10), un signal de réglage aux ampoules ou à l'ampoule (6).

2. Unité de lampe (LE) à régulation électronique selon la revendication 1, **caractérisée par le fait que** l'unité de lampe (LE) est réalisée pour transmettre un signal de commande, capté par les un ou plusieurs éléments de commande et/ou capteurs, au réseau de lampes par l'intermédiaire de l'élément de raccordement.

3. Unité de lampe (LE) à régulation électronique selon la revendication 2, **caractérisée par le fait qu'**elle présente par ailleurs un basculeur (4) qui est réalisé pour sortir, sur base du signal de commande issu de l'autre unité de lampe, le signal de réglage vers les ampoules par l'intermédiaire de l'élément de réglage de puissance.

4. Unité de lampe (LE) à régulation électronique selon l'une des revendications 1 à 3, **caractérisée par le fait que** l'élément ou les éléments de commande et/ou capteurs (BS) et l'élément de raccordement à l'alimentation de courant (3, 8) sont raccordés en parallèle à la ligne de signal d'informations (SL).

5. Unité de lampe (LE) à régulation électronique selon l'une des revendications 1 à 4, **caractérisée par le fait que** la ligne de signal d'informations (SL) est réalisée sous forme de bus à un ou plusieurs fils interne à l'unité de lampe (LE) pour le circuit (SW), l'élément ou les éléments de commande (BS) et l'élément de raccordement (3, 8).

6. Unité de lampe (LE) à régulation électronique selon l'une des revendications précédentes, **caractérisée par le fait que** les éléments de commande et/ou capteurs (BS) sont intégrés par construction dans l'unité de lampe (LE) de sorte qu'ils puissent être influencés de l'extérieur.

7. Unité de lampe (LE) à régulation électronique selon l'une des revendications précédentes, **caractérisée par le fait que** l'ampoule ou les ampoules (6) sont intégrées par construction dans l'unité de lampe (LE).

8. Unité de lampe (LE) à régulation électronique selon l'une des revendications précédentes, **caractérisée par** un commutateur de signal (15), connecté entre la ligne de signal d'informations (SL) et le circuit (SW), avec une connexion collective commune (16) qui est reliée à la ligne de signal d'informations (SL), et avec plusieurs connexions individuelles (14) reliées, chacune, à une entrée ou sortie ou une interface (ADW, RxD, TxD) du circuit (SW) et/ou à au moins un convertisseur analogique/numérique, le convertisseur analogique/numérique étant relié, du côté de la sortie, au circuit (SW).

9. Unité de lampe (LE) à régulation électronique selon la revendication 8, **caractérisée par le fait que** les connexions individuelles (14) du commutateur de signal (15) sont reliées aux interfaces de microcontrôleur respectives (ADW, RxD, TxD) pour la conversion analogique-numérique, la conversion numérique-analogique, la conversion tension-fréquence, l'interruption de programme (interrupt) et/ou le codage binaire.

10. Unité de lampe (LE) à régulation électronique selon l'une des revendications précédentes, dans lequel le moyen d'alimentation de courant présente un rail d'alimentation de courant sur lequel sont modulés des signaux d'informations, et en amont de l'interface de communication est connecté un modem adapté aux signaux d'informations d'alimentation de courant, **caractérisée par le fait que** le modem est relié au circuit par l'intermédiaire de la ligne de signal d'informations.

11. Unité de lampe (LE) à régulation électronique selon l'une des revendications précédentes, **caractérisée par** un convertisseur d'informations ou de données (12), réalisé pour couplage à des systèmes de bus externes, avec une interface intérieure qui est reliée à la ligne de signal d'informations (SL), et avec une ou plusieurs interfaces extérieures (RxD. TxD) qui sont disposées de manière accessible pour le raccordement au système de bus externe.

12. Unité de lampe (LE) à régulation électronique selon la revendication 11, **caractérisée par** un moyen de réglage à commande manuelle (13) destiné à sortir des codes de réglage binaires pour le convertisseur d'informations ou de données (12) en fonction du système de bus à coupler.

13. Unité de lampe (LE) à régulation électronique selon l'une des revendications précédentes, **caractérisée par** une réalisation sous forme de connecteur à un ou plusieurs dispositifs de réception enfichables (22) amovibles de composants réalisés de manière modulaire de l'unité de lampe (LE), dispositifs de réception enfichables (22) dans lesquels sont reçus au moins un ou plusieurs éléments de commande et/ou capteurs (BS) et/ou ampoules (6).

14. Unité de lampe (LE) à régulation électronique selon la revendication 13, **caractérisée par le fait que** le connecteur est traversé par un rail d'alimentation de courant (SV).

15. Unité de lampe (LE) à régulation électronique selon l'une des revendications 1 à 14, **caractérisée par le fait que** l'élément de raccordement (3, 8) est réalisé avec une fiche plate, un moyen de serrage et/ou enfichable à deux, trois ou plusieurs pôles (2) pour le couplage à un rail d'alimentation de courant ou moyen d'alimentation de courant (SV).

16. Unité de lampe (LE) à régulation électronique selon l'une des revendications 1 à 15, **caractérisée par le fait que** la ligne de signal d'informations (SL) est reliée à un ou plusieurs optocoupleurs ou autres moyens de couplage, de préférence isolés galvaniquement (K) pour la transmission d'informations à des réseaux externes (II) ou autres récepteurs.

17. Réseau de lampes avec plusieurs unités de lampe (LE) selon l'une des revendications 1 à 16, sous forme de noeuds de réseau qui sont raccordés à un moyen d'alimentation de courant commun (SV) dans lequel est également formé un canal pour la transformation d'informations (DS), **caractérisé par le fait qu'**au moins une unité de lampe (LE) est pourvue de, ou couplée directement à, un ou plusieurs éléments de commande et/ou capteurs (BS) et présente une ligne de signal d'informations (SL) à un ou plusieurs fils, et la ligne de signal d'informations (SL) est couplée tant à ou aux éléments de commande et/ ou capteurs (BS) qu'au canal de transmission d'informations (DS), un signal de commande déclenché par un élément de commande et/ou capteur d'une unité de lampe étant transmis à d'autres unités de lampe participant au réseau de lampes.
